# EUROPEAN PATENT SPECIFICATION

(11) **EP 1 505 798 B1**
(45) Date of publication and mention of the grant of the patent: **28.09.2016**
(21) Application number: 04103773.0
(22) Date of filing: 05.08.2004
(51) Int. Cl.: H04L 29/08

(54) **MESSAGING SERVICE IN A TELECOMMUNICATION SYSTEM**
NACHRICHTENDIENST IN EINEM TELEKOMMUNIKATIONSSYSTEM
SERVICE DE MESSAGERIE DANS UN SYSTÈME DE TÉLÉCOMMUNICATIONS

(30) Priority: 07.08.2003 FI 20031136
(43) Date of publication of application: 09.02.2005
(73) Proprietor: TeliaSonera Finland Oyj, 00510 Helsinki (FI)
(72) Inventor: Väänänen, Kai, 02940 Espoo (FI); Jokela, Harri, 00350 Helsinki (FI)
(74) Representative: Kolster Oy Ab

(56) References cited:
- WO-A-02/054803
- "IP MULTIMEDIA SYSTEM MESSAGING" 3GPP TS 22.340, 1 March 2003 (2003-03-01), XP002297060
- NOKIA: "SIP BASED TECHNOLOGY SOLUTIONS FOR MMS" 3GPP TSG-T2 SWG 3 ADHOC, 27 June 2001 (2001-06-27), XP002297061

## Description

### FIELD OF THE INVENTION

The invention relates to messages delivered in a telecommunication system, and particularly to multimedia messages delivered in a mobile communication system.

### BACKGROUND OF THE INVENTION

A mobile communication system generally refers to any telecommunication system enabling wireless communication while users are moving within the service area of the system. Often the mobile communication network is an access network providing a user with wireless access to external networks, hosts, or services offered by specific service providers.

Along with the telecommunication systems, the variety of services offered through telecommunication systems, especially mobile communication systems, improves continuously. One example of such services is an MMS (Multimedia Messaging Service), corresponding to an SMS (Short Message Service) and providing automatic, immediate delivery of a user-created content from the user's mobile station. The MMS is standardized by the WAP (Wireless Application Protocol) Forum and the 3GPP (Third Generation Partnership Project, cf. www.3gpp.org, specification group for third generation mobile communication services). An MMS message, called MM, may include different elements at the same time: text, sound, images, photographs, voice clips, video clips, etc. The user of an MMS phone is able to create a highly personalized message, for instance a greeting, birthday congratulation or the like message. The structure and standard of an MMS message enable the transmission of the message, instead of or in addition to using an MMS phone, also as email to an email address. Another advantage of the MMS is that the message is a multimedia presentation in a single entry, not a text file with attachments. The MMS is also bearer-independent, and therefore not limited to only GSM or WCDMA networks.

One of the problems associated with the MMS is that there exists no mechanism which allows to modify the original message in the network by adding some information to the original content of the message by the network operator or a service provider so that the modified message is sent instead the original message to a receiver the original message was targeted to. Techniques to add some information to the original content of the message by the network operator are described in document WO 02054803.

### BRIEF DESCRIPTION OF THE INVENTION

An object of the present invention is thus to provide a method, a telecommunication system and a server component for implement-ing the method so as to solve the above problem. The objects of the invention are achieved by a method and a system which are characterized by what is stated in the independent claims. The preferred embodiments of the invention are disclosed in the dependent claims.

### BRIEF DESCRIPTION OF THE DRAWINGS

In the following the invention will be described in greater detail by means of preferred embodiments with reference to the attached drawings, in which
Figure 1 illustrates a system architecture supporting MMS;
Figures 2 and 3 illustrate signalling in exemplary embodiments 1 and 2 of the invention;
Figure 4 illustrates a system architecture employing IMS;
Figures 5 to 7 illustrate signalling in exemplary embodiment 3 of the invention.

### DETAILED DESCRIPTION OF THE INVENTION

The present invention is applicable in any telecommunication system providing a messaging service, such as the multimedia messaging service MMS. Such systems include what are called third generation mobile systems, such as the UMTS (Universal Mobile Communication System) and systems based on GSM (Global System for Mobile communication) or corresponding systems, such as GSM 2+ systems and the future 4^{th} generation systems. The invention is also applicable in so-called fixed systems. In the following, the invention will be described by using the MMS with different exemplary systems without restricting the invention to such service and systems, however. Other examples of messaging services are the SMS, EMS, another kind of messaging service implemented by a separate client or a client integrated with a user terminal. The specifications of telecommunication systems and particularly wireless telecommunication systems develop rapidly. Such development may require extra changes to the invention. Therefore, all words and expressions should be interpreted broadly and they are intended to illustrate, not restrict the invention. Furthermore, the element(s) in which the inventive function(s) is(are) performed is(are) not essential to the invention.

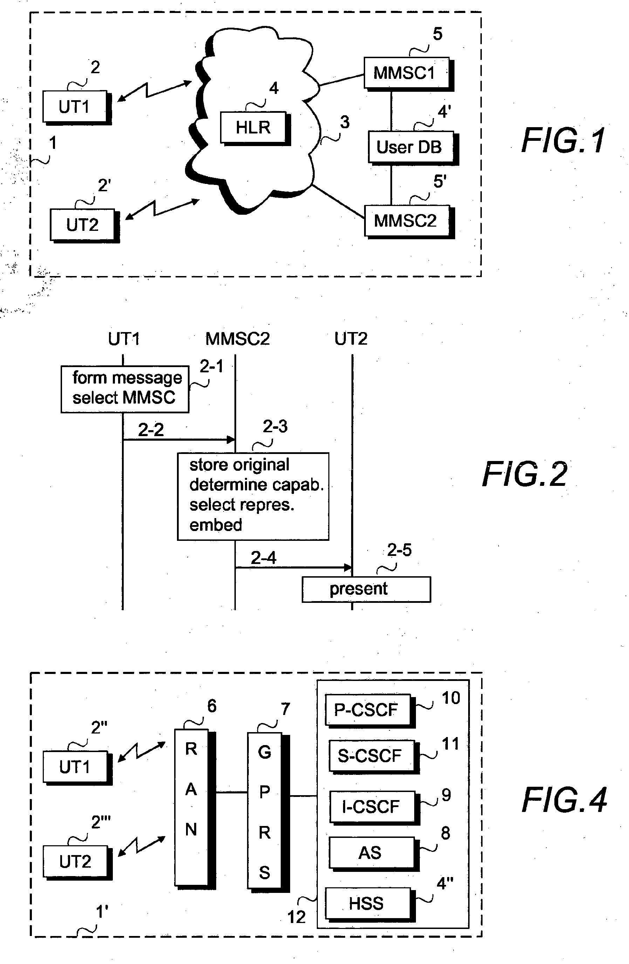

Figure 1 shows a generalized Multimedia Messaging Service architecture specified by the 3GPP wherein the MMS can be implemented on top of a customized WAP stack, for instance, or by means of an IP-based solution.

The Multimedia Messaging Service architecture combines different networks and network types and integrates messaging systems already existent within these networks. A user terminal operates with the Multimedia Messaging Service Environment, MMSE (not specifically shown in Figure 1). This environment may comprise 2G and 3G networks, 3G networks with islands of coverage within a 2G network, and roamed networks. The MMSE provides all the necessary service elements, e.g. delivery, storage and notification functionality. These service elements may be located within one network or distributed across several networks or network types. Figure 1 illustrates only those network nodes needed in describing the invention. The implementation of the network nodes shown in Figure 1 is only an example of implementing network nodes. It is apparent to a person skilled in the art that the system may also comprise other functions, network nodes and structures that need not be described in detail herein.

The user terminal UT 2, 2' of the exemplary architecture in Figure 1 comprises transceiver means TxRx for connecting the terminal to a network 3. The user terminal 2, 2' comprises an MMS user agent or is connected to an external device comprising the MMS user agent. In this context, the user terminal UT generally refers to a combination of an actual terminal and the MMS user agent. The MMS User Agent is an application layer function that provides the users with the ability to view, compose and handle MMs (e.g. submitting, receiving, deleting of MMs). The MMS User Agent may support Digital Rights Management DRM, thus enabling the protection of separate MM content elements.

The user terminal 2, 2' may be any node or a host which has an interface to the network 3. It can be, for example, a speech-only mobile station, a multi-service terminal that serves as a service platform and supports the loading and execution of different functions related to services, a PDA device, or a laptop PC, possibly connected to a cellular phone capable of packet radio operation. The other embodiments of the UE include various pagers, remote-controllers, monitoring and/or data acquisition devices, etc.

The functionality of the user terminal UT according to the invention depends on the implementation and the embodiment, and will be described later.

Multimedia messaging may encompass many different network types, wherein the basis of connectivity between these different networks is preferably provided by the Internet protocol and its associated set of messaging protocols. This approach enables compatibility between messaging in 2G and 3G wireless networks and messaging systems used on the Internet. Thus, in the example of Figure 1, the network 3 can be any prior art wireless network, such as a network which supports the GSM service, a network which supports the GPRS service (General Packet Radio Service), a third-generation mobile communication network, such as a UMTS network, a wireless local area network WLAN or a short-range wireless network, such as a Bluetooth network. Also other circuit-switched or packet-switched networks can exist between the UT and the MMSC. Although not shown in Figure 1, the user terminal UT1 can be connected to a first type of network and the user terminal UT2 to a second type of network.

The MMS may have access to several user databases 4, 4'. These may include, for example, user profile database, subscription database and the home location register HLR 4, the latter one being a database in the user's home network in the example illustrated in Figure 1,. These user databases 4, 4' contain at least MMS user subscription information, information for the control of access to the MMS, information for the control of the extent of available service capability (e.g. server storage space), a set of rules how to handle incoming messages and their delivery and information on the current capabilities of the user's terminal. These databases may be comprised of one or more entities that contain user related information, such as subscription and configuration. Typically, subscriber information for each subscriber is stored in the HLR 4 permanently or semi-permanently such that the subscriber information is combined with a subscriber identifier, which, for example, is an IMSI in the GSM system.

For the MMS, the system 1 comprises a multimedia messaging server, called as multimedia messaging service centre MMSC. The MMSC comprises at least an MMS Relay/Server, which is an MMS-specific network entity/application that is under the control of an MMS service provider. The MMS Relay/Server is responsible for storage (temporary and/or permanently) and handling of incoming and outgoing multimedia messaging messages and for the transfer of the multimedia messaging messages between different messaging systems and for generating charging data. Depending on the implementation, the MMS Relay/Server may be a single logical element or may be separated into MMS Relay and MMS Server elements. These may be distributed across different domains. The MMSC has access to databases 4, 4' containing subscription data.

In the exemplary embodiment of the present invention, illustrated in Figure 1, messages relayed as formed by the sender are transmitted via a multimedia messaging service centre MMSC1 5 and messages with which at least one information component is associated are transmitted via a multimedia messaging service centre MMSC2 5'. In other words, the MMSC1 represents here a "basic" MMSC relaying messages whereas MMSC2 represents a new server component associating some information with messages passing through. For example, chargeable messages, i.e. messages the sender pays for, can be sent via the MMSC1, and messages free of charge or partly free of charge, i.e. messages an advertiser pays for at least partly, can be sent via MMSC2 associating an advertisement with the message before relaying the message to the receiver. Yet another possibility is that the associated information component is part of a service which the sender is charged for, i.e. messages sent via the MMSC1 may be cheaper than messages sent via the MMSC2. One example of such a service is associating a melody with the original message in the MMSC2.

It is obvious to a person skilled in the art that there can be more than one multimedia messaging service centre associating messages with an information component and that at least some of them may be integrated with each other and/or with the "basic" multimedia messaging service centre so that they form one single server comprising at least two server components.

The functionality of the MMSC1 and/or the MMSC2 according to the invention depends on the implementation and the embodiment, and will be described later.

The MMSC may be connected directly to the same network as the user terminal UT, or via a gateway and another network, such as WAP-gateway and IP-network, or via several networks and/or gateways.

Figure 2 illustrates signalling according to an exemplary embodiment 1 of the invention. In the exemplary embodiment 1 of the invention, it is assumed that the sender may select message-specifically the MMSC via which a message is transferred.

A sender forms a message by the UT1 in step 2-1. It bears no significance to the invention how the message is formed, i.e. the invention does not restrict formation of the message. When the message is ready, the user selects, in step 2-1, the MMSC via which the message should be relayed to a receiver, the UT2. The user selects the MMSC basically on the basis whether or not he wants that something, i.e. at least one information component, is added to the message. The UT1 may be arranged to request the MMSC address from the sender in response to a "send MM" command, for example by displaying the following options to the user: use predefined MMSC, a list of other possible MMSCs and/or giving an empty space for the address of the MMSC. The predefined MMSC may always be the MMSC1, i.e. a basic MMSC which just relays the message. The predefined MMSC may also be defined user profile -specifically so that the user profile currently in use defines the predefined MMSC. The predefined MMSC may also depend on the receiver, i.e. the user may have defined, at least for some receivers, receiver-specifically the predefined MMSC and for other users a default MMSC is used as a predefined MMSC. The receiver-specific MMSCs may be defined user profile -specifically, i.e. so that in user profile "home" the predefined MMSC for receiver N is the MMSC2 and in user profile "work" the MMSC1. The list of other possible MMSCs may be composed of MMSC addresses delivered to the UT1 utilizing the WAP, the HTTP (Hypertext transfer protocol) or the like, for example. The list may depend on the location of the UT1 and/or on the time when the message is going to be sent and/or on memberships of the UT1 user. For example, an advertiser can offer MMs free of charge to people visiting a certain exhibition at a certain time. An advertiser may also deliver an address of his MMSC to members of some predefined group(s), such as people belonging to a certain sports club. The advertiser may also offer MMs free of charge to group members visiting a certain exhibition at a certain time.

In some other embodiments of the invention, the UT1, preferably the MMS User Agent, may be arranged to select the MMSC, instead of the user, on the basis of the receiver and/or on the basis of the profile currently in use.

In other words, the sender can select the information component which is to be associated with the original message from among alternatives. The alternatives, from among which the selection is performed, may be chosen on the basis of the sender's current profile and/or the receiver's current profile and/or capabilities of the user terminal used by the sender. The selection can be performed, for instance, on the basis of parameters added to the message without any sender input, i.e. automatically. The manual choice performed by the sender can be given by using a menu which locates in a WAP or WWW menu relating to the system or by using a separate client locating in the user terminal.

In the example illustrated in Figure 2, the user selects to send the MM to an MMSC2, which is an MMSC embedding the message with a predetermined information component. After the selection, the UT1 forwards the MM in message 2-2 to the MMSC2.

The MMSC2 of exemplary embodiment 1 is arranged, in response to receiving message 2-2, to store, in point 2-3, the original MM, i.e. the content formed by the sender in point 2-1.

The original MM is stored in exemplary embodiment 1 in order to allow the receiver, i.e. the user of the UT2, to delete the embedded information component from the message. Typically, the user of the UT2, i.e. the receiver, then compensates for the deletion of the embedded information, either to the sender, i.e. user of the UT1, or to the service provider of the MMSC2, especially if the original MM is copyrighted so that compensations should be paid when the original MM is used, for example forwarded. Digital rights management (DRM) can be applied to such messages.

Then the MMSC2 of the exemplary embodiment 1 is arranged, in point 2-3, to determine messaging capabilities of the receiver's user terminal and on the basis of the capabilities to select the proper manner of representation of the information component. For example, if the information component contains video, audio and text, but the receiver's user terminal UT2 can only display text and one still image, then the MMSC2 selects one still image and the text as the proper manner of representation of the information component. The service provider of the MMSC2 may have defined several manners of representation of the information component in preference order, each manner of representation with its minimum requirements. The MMSC2 may also be arranged to form the proper manner of representation of the information component by leaving out those parts of the information component which are not supported in the UT2, for example. Yet another possibility is that a separate component, connected to the system, offers, for example to advertisers, an interface for associating messages with information components. Via that interface one can submit different banners to be used in different kind of terminals. Still another possibility is that the original message with/and/or the information component may be split into several messages and/or the message format can be changed, for instance from video to still picture and voice. The message and the information component can also be stored in the system, for example in the MMSC2, wherefrom the receiver can later pick it up, especially if the capabilities of the receiver's terminal at the time of original delivery moment do not support the chosen message format. In that case, a notification of the message can be sent to the receiver's terminal. The message delivery also covers this possibility.

When the proper manner of representation of the information component is selected, the MMSC2 embeds, in point 2-3, the information component in the original message according to predetermined rule(s), for example adds the information component to the foot and then the MMSC2 delivers the original MM with embedded information component in message 2-4 to the receiver's terminal UT2.

The embedded information component may be an advertisement, voice sample, sponsor logo, image, melody, a link, such as an URL address, to Internet page or to a server and/or service, evidence that the UT1 located at a certain place when the original message was sent, etc or any combination thereof. The embedded information component may comprise several independent information components, for example it may comprise both the sponsor logo and the evidence.

When the UT2 receives message 2-4, the UT2 presents, for example displays, in point 2-5, the original content and the embedded information component to the user of the UT2.

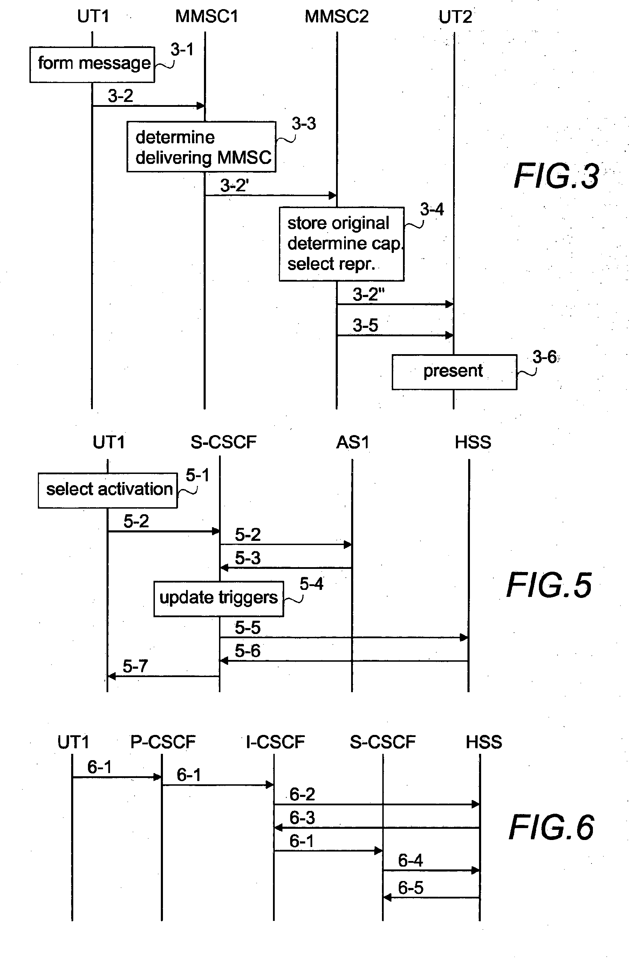

Figure 3 illustrates signalling according to an exemplary embodiment 2 of the invention. In the exemplary embodiment 2 of the invention, it is assumed that the network selects the MMSC via which a message is transferred.

A sender forms a message by the UT1 in step 3-1. It bears no significance to the invention how the message is formed, i.e. the invention does not restrict formation of the message. When the original message is ready, the UT1 sends it to an MMSC which does not associate the original message with an information component, i.e. to the MMSC1. The address of the MMSC1 is preferably predefined in the UT1 and it may depend on the user profile currently in use. When forming the message, the sender may add to the original message an indication indicating that this message is associated with a certain service, such as location evidence service and/or that this message should be delivered, if possible, via an MMSC offering free of charge MMs.

In response to receiving message 3-2, the MMSC1 is arranged to determine, in point 3-3, which MMSC is a delivering MMSC for the MM. In other words, the MMSC1 is arranged to decide whether or not message 3-2 should be delivered via an MMSC associating the original message with an information component. The MMSC1 can make the decision based on information maintained in the network, such as user information, and/or based on indication(s) in the message. The delivering MMSC may be defined user profile -specifically in user information so that the user profile currently in use defines the delivering MMSC. The delivering MMSC may also depend on the receiver, i.e. the user may have defined, at least for some receivers, receiverspecifically the delivering MMSC and for other users the MMSC1 is used as a delivering MMSC. The MMSC1 may also, when determining the delivering MMSC, take into account information on other MMSCs offering, for example, free of charge MMs, either to all subscribers, to a predefined group of subscribers and/or subscribers sending messages to a predefined group of receivers or a receiver. This "limited service offer" may be limited to senders and/or receivers being in a certain location and/or to a certain time. Yet another example relates to a service where the receiver is charged for the reception of an MM. The MMSC1 may be arranged to check from receiver's user information via which MMSC MMs delivered to the receiver should be transmitted.

In the example illustrated in Figure 3, the delivering MMSC is an MMSC2, which is an MMSC associating the message with a predetermined information component. After the selection the MMSC1 forwards the original MM in message 3-2' to the MMSC2. Depending on the implementation, the MMSC1 may delete the indications, or at least the indication on the basis of which the MMSC2 was selected, from the original message before forwarding it, providing that such indication exits.

The MMSC2 of the exemplary embodiment 2 is also arranged, in response to receiving message 3-2', to store, in point 3-4, the original MM, i.e. the content formed by the sender in point 3-1, to determine messaging capabilities of the receiver's user terminal and on the basis of the capabilities to select and/or to form the proper manner of representation of the information component, as described earlier with Figure 2. When the proper manner of representation of the information component is selected, the MMSC2 delivers the original message content, preferably without any possible indications, in message 3-2" to the receiver's terminal UT2 and subsequently message 3-5 containing the information component to the to the receiver's terminal UT2. Thus, in this embodiment the information component is not embedded in but associated with the original message by sending the information component in another message. In such a case, where the information component does not fit into one message, for example if the original MM is delivered as an SM, the information component may be sent in subsequent messages.

When the UT2 receives messages 3-2" and 3-5, the UT2 presents, for example displays, in point 3-6, the original content and the information component to the user of the UT2. The contents of the messages may be combined before they are presented or they can be presented subsequently so that they seem to be one message, for example first showing the information component for a couple of seconds and then the original message.

In some other embodiment of the invention, the message comprising the information element (message 3-5) is delivered first to the receiver and only after the receiver has accepted and/or viewed that message, the message containing the original message (message 3-2") is delivered to the receiver.

The implementation of the MMSC2 according to the embodiment 2 of the invention enables "cartoon-type" image service wherein the service is provided so that an information component, such as an advertisement, is presented, for example displayed, between images. The MMSC2 may be arranged to associate these different images, i.e. different original MMs, with different kind of information contents according to a predetermined rule. For example, the receiver sees image 1, advertisement 1, image 2, advertisement 2, image 3, advertisement 1, etc.

Although not shown in Figures 2 and 3, the MMSC2 may be arranged to acknowledge a delivery of an MM to a third party, the party being preferably a service provider or the one who is paying for the MM. For example, if the MMSC2 is for free of charge or partly free of charge MMs, i.e. an advertisement is associated with the message, the MMSC2 may be arranged to acknowledge to the advertiser a successful delivery of an MM comprising the advertisement. The acknowledgment may comprise information on the manner of representation of the used information component, the sender of the message, the receiver of the message, the location where the message was sent and/or the time the message was sent, providing the local authorities allow submission of such information to the advertisers.

Other embodiments of the invention can be established by combining different features of the described embodiments. For example, the MMSC2 can decide on the basis of the receiver's terminal capabilities whether to embed the information content or deliver it in a separate message. Another example is that the user sends the message towards an MMSC selected as disclosed with the embodiment 1, the MMSC associates the message with an information component and forwards this "packet" to another MMSC, selected according to principles disclosed with the MMSC1 in embodiment 2, which then again may determine another delivering MMSC or deliver the message associated with information components. Yet other examples are embodiment 1 where the MMSC2 functionality is replaced with the MMSC2 functionality of the embodiment 2 and embodiment 2 where the MMSC2 functionality is replaced with the MMSC2 functionality of embodiment 1. In one embodiment of the invention, the sender gives the address of the MMSC2 when sending the message, the MMSC2 simply associates the message with an information component and delivers it to the receiver. An advantage of the embodiment is that it requires no great changes to the MMS infrastructure, only a new server component, implemented as a single logical network node or as a part of another logical network node.

Figure 4 is a block diagram showing those parts of a system according to embodiment 3 of the invention which are needed for describing embodiment 3. The implementation of network nodes shown in Figure 4 is only an example of implementing network nodes. It is apparent to a person skilled in the art that the system may also comprise other functions, network nodes and structures that need not to be described in detail here.

Embodiment 3 employs an IP Multimedia Subsystem IMS, such as an All-IP system standardized by the 3GPP and supporting of an IP-based session control protocol, such as a SIP protocol. The SIP (Session Initiation Protocol) is a control protocol for setting up, modifying and terminating sessions between one or more parties.

The system 1' comprises user terminals 2", 2"' corresponding to the user terminals described above, a radio access network RAN 6 via which the user terminals can communicate with to a core network 7, which is typically implemented as a GPRS (General Packet Radio System)-based system. Of the elements of the IMS subsystem 12, Figure 4 also illustrates a home subscriber server 4" logically corresponding to the HLR described above, maintaining user information and monitoring subscriber's location, an application server AS 8 discussed below and a call session control function CSCF, which may have three different roles. The functionality of the different elements according to the invention will be described later.

The different roles of the CSCF are: Proxy-CSCF (P-CSCF) 9, which comprises a PCF function and transfers SIP messages to other SIP network elements; Interrogating-CSCF (I-CSCF) 10, which is a subscriber home network contact point, allocates the serving CSCF (S-CSCF) 11 and forwards SIP requests to the S-CSCF 11; S-CSCF 11, which is a CSCF controlling the end-to-end session of a mobile station. In other words, the S-CSCF 11 is a network node which participates in controlling a session established by the user terminal of a subscriber and in supporting the establishment of sessions terminating at the user terminal of a subscriber registered in the network, as well as in supporting the triggering of the services associated with these sessions when the triggering conditions are fulfilled. The S-CSCF 11 usually contains a subscriber database to which required subscription data is downloaded from the HSS 4'" when the user terminal 2", 2'" registers with the S-CSCF 11. The S-CSCF 11 has a signalling connection to the HSS and the S-CSCF 11 also communicates with application servers (only one shown in Figure 4).

The application server AS1 logically corresponds to the MMSC2 described above, i.e. the server associating a message with an information component. However, the S-CSCF performs the routing functionalities of the MMSC2 described above.

In embodiment 3 of the invention, the sender has to activate the associating service before it can be used. The activation may be performed just before the service is used, or well in advance. In the following, embodiment 3 of the invention is described assuming that the associating service is a sponsor service. However, also other kind of associating services described above may be used according to same principles.

Figure 5 is a signalling diagram illustrating the activation of the sponsor service. In Figure 5 it is assumed that the UT1 is already registered with the IMS and to an S-CSCF. The user of the UT1 has decided to activate the sponsor service and selects, in point 5-1, via an user interface of the UT1 an activation button for the service. It should be understood that the above is only one example of the activation. The activation may be performed automatically, for example, when a message is sent, whereupon the message may be sent by pressing "sponsored" button or "ordinary" button, for instance. Also some service parameters can be used for activation.

In response to the selection in point 5-1, the UT1 sends message 5-2 to the S-CSCF, which forwards message 5-2 to the addressed AS, the AS1. The AS1 receives in message 5-2 information needed for activation of the service, and sends triggering information relating to the service to the S-CSCF in message 5-3. In response to receiving message 5-3, the S-CSCF updates, in point 5-4, triggers for the service and sends message 5-5 to update the HSS so that the user of the UT1 will have the service also in future. If the activation of the service is a chargeable event, message 5-5 may include information on the fact.

In response to receiving message 5-5, the HSS updates user information and sends an acknowledgement in message 5-6.

In response to receiving message 5-6, the S-CSCF sends the UT1 message 5-7 containing information that the service is now activated and in use.

Figure 6 is a signalling diagram according to embodiment 3 of the invention in a situation when the user, after the service activation, switches off the UT1 and then switches on the UT1. Figure 6 illustrates the signalling after a GPRS attach procedure and PDP context activation, i.e. Figure 6 starts when the UT1 begins the IMS registration procedure by sending message 6-1 via the P-CSCF to the I-CSCF. The I-CSCF inquires from the HSS in message 6-2 information which enables the control of a session to a serving CSCF. The HSS responds to the I-CSCF by sending in message 6-3 information indicating that the serving CSCF for the UT1 is the S-CSCF which has a connection to the AS1.

In response to receiving message 6-3, the I-CSCF forwards message 6-1 to the S-CSCF, which in response to receiving message 6-1, inquires the user information from the HSS in message 6-4 and at the same time informs the HSS that the S-CSCF is the serving CSCF of the UT1. In response to receiving message 6-4, the HSS updates user information and sends user information to the S-CSCF in message 6-5, the user information comprising triggers for the service provided by the AS 1.

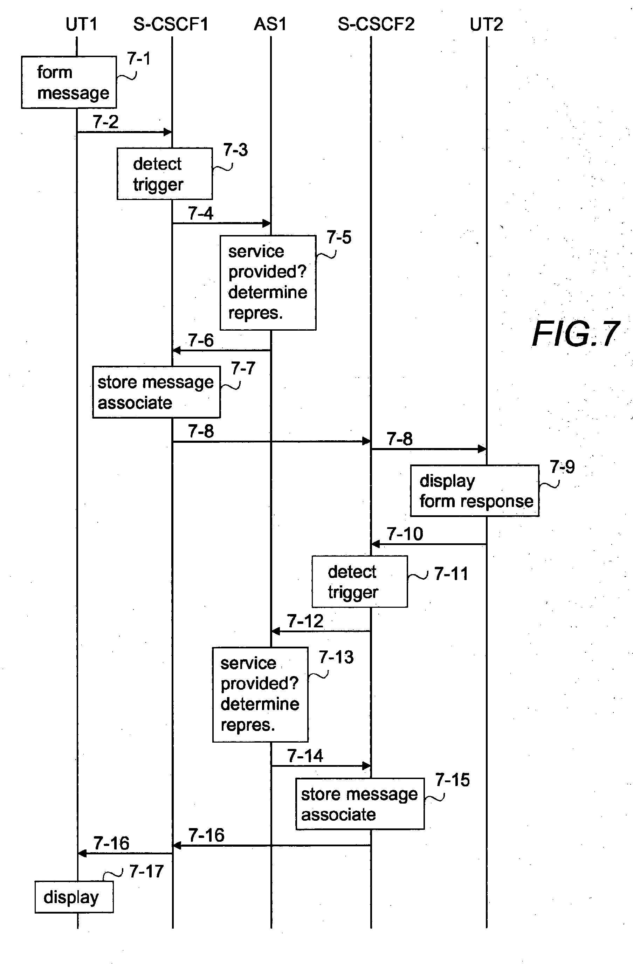

Figure 7 illustrates the usage of the service according to the embodiment 3 of the invention in a session between UT1 and UT2. In Figure 7 it is assumed that the UT1 is already registered with the S-CSCF1 and the UT2 with the S-CSCF2. In this example it is further assumed that both the UT1 and the UT2 have activated the service provided by the AS1. However, it is also possible that only either of the UT1 or the UT2 has activated the service provided by the AS1. In the example illustrated in Figure 7, the user of the UT1 wants to send an MM, sponsored by the service provider of the AS1, to a subscriber B using the UT2. Therefore the user forms, in point 7-1, an MM according to prior art, for example, and sends the MM to the UT2 in message 7-2 which is routed to the S-CSCF according to prior art. In response to receiving message 7-2, the S-CSCF detects, in point 7-3, the trigger to the AS1 on the basis of the sender of message 7-2. Therefore the S-CSCF sends message 7-4 to the AS1, message 7-4 containing user information and other information from message 7-2. On the basis of the information in message 7-4, the AS1 determines, in point 7-5, whether or not the service is provided with this particular message sent by the UT1 to the UT2. The determination can be performed according to the principles disclosed above with Figures 2 and 3 with MMSC selections. In this example it is assumed that the service is provided and the AS1 then determines, in point 7-5, the proper manner of representation for the information component and delivers the information component to the S-CSCF1 in message 7-6. In response to message 7-6, the S-CSCF1 stores, in point 7-7, the original MM and associates, in point 7-7, the MM with the information component and delivers the MM and the information component to the UT2 through the S-CSCF2 in message 7-8 (associating performed by embedding) or in subsequent messages 7-8 (associating performed by subsequent messages, not shown in Figure 7). In response to message(s) 7-8, the UT2 presents, for example displays, in point 7-9, the original MM and the information component to the subscriber B.

After seeing the MM, the subscriber B responds, in point 7-9, to the message by forming an MM according to prior art, for example, and sends the response MM to the UT1 in message 7-10, which is routed to the S-CSCF2 according to prior art. (The S-CSCF2 and the S-CSCF1 may actually be the same S-CSCF serving both terminals.) In response to receiving message 7-10, the S-CSCF2 detects, in point 7-11, the trigger to the AS1 on the basis of the sender of message 7-10, for example. The trigger may also be detected on the basis of the receiver of the message, or because the message is a response in a sponsored session, or the response message itself may contain triggering information, or message 7-8 may have contained information on the basis of which the S-CSCF2 detects the trigger, for example. Therefore the S-CSCF2 sends message 7-12 to the AS1, message 7-12 containing user information and other information from message 7-10. The other information may contain information on the receiver, i.e. on the UT1 and/or information indicating that the UT2 agreed to receive an advertisement, for example.

On the basis of the information in message 7-12, the AS1 determines, in point 7-13, whether or not the service is provided with this particular message sent by the UT2 to the UT1. The determination can be performed according to the principles disclosed above with Figures 2 and 3 with MMSC selections. One decision criterion may be that message 7-10 is a response message in a sponsored session. The response message may be, for example, free of charge or cheaper than a normal response message, because the sender of the response message has agreed to receive an advertisement. In this example it is assumed that the service is provided and the AS1 then determines, in point 7-13, the proper manner of representation for the information component and delivers the information component to the S-CSCF2 in message 7-14. In response to message 7-14, the S-CSCF2 stores, in point 7-15, the original response MM and associates, in point 7-15 the response MM with the information component and delivers the response MM and the information component to the UT2 through the S-CSCF1 in message 7-16 (associating performed by embedding) or in subsequent messages 7-16 (associating performed by subsequent messages, not shown in Figure 7). In response to message(s) 7-16, the UT1 presents, for example displays, in point 7-17, the original MM and the information component to the subscriber A.

In another embodiment, message 7-10 is sent via the S-CSCF2 to the S-CSCF1, which detects the trigger and performs operations described above with the S-CSCF2.

Although embodiment 3 was described only with one server, the AS1 providing information component associating service, it is obvious to one skilled in the art that one subscriber can activate several associating services, each preferably having their own application servers and application triggers. The S-CSCF is able to separate messages into different ASs on the basis of service parameters involved. Furthermore, the UT2 may answer using another server, an AS2, and/or the UT2 may answer without any advertisement and/or other information added to the response. In other words, the session may also be sponsored only partly. It is also possible that a message received earlier from the same or another sender can be utilized when sending or amending message 7-10.

It is also obvious to one skilled in the art that the present invention may also be implemented with a group session, even so that only part of the group session members apply the present invention. For example, the UT1 may send a message/open a session to the UT2 and UT3, and only one of the UT2 and UT3 may agree to receive the advertisement and apply the present invention.

One criterion on the basis of which it may be decided whether or not to apply the invention to other parties of the session may be characteristic(s) of the data connection used by a party. One example of the characteristic is data transmission rate.

In the IMS, the present invention may be also applied to other types of communications, such as connections like calls, for example to multimedia calls enabling for example a sponsored game session over the network. The calls may utilize "push-to-talk" features. The call may also be a so-called "rich call", where e.g. an advertisement is shown on caller's user terminal and/or on called's terminal when certain prefix(es) and/or parameter(s) are chosen.

In session-based sponsored communication, the terminal may attach different kind of information to the signalling messages. Another possibility is to transfer the information via a separate data connection. The information may be parameters, such as quality of service (QoS), location information, and/or information on new information channels, for example. The information channel may be used for transferring information needed to generate a sponsored message. The information channel may be a separate PDP context or suchlike. The information channel may also be a pointer to another information, such as a pointer to a database containing personifying information or information on what the person is interested in, the information being used for selecting proper advertisements. The subscriber A (i.e. the terminal) may request a certain QoS class when opening the session but a better QoS class may be requested in the network by any entity in order for the advertisement to be delivered successfully and/or more smoothly. Therefore, the QoS of the session may be different than that requested by the subscriber A. For example, an advertiser may have requested a certain quality in order for guaranteeing that the advertisement is displayed at an adequate rate to satisfy quality requirements. In addition to the session requested by the subscriber A, a new session (connection) may be created and the new session may have different session parameters than the original one, thus enabling the sponsored leg to have different parameters than those requested by the subscriber A. New communication channels may be opened when the sponsored connection is established. A new communication channel may be a separate connection established to deliver an advertisement. For example, a message containing only text may be delivered via a different route than an advertisement message containing a video. Depending on the implementation, the messages delivered via different channels may be combined before they are displayed to the receiver or they may be displayed as separate messages or any combination thereof.

In some other embodiments of the invention, the storing of the original message and/or determining the proper manner of representation of the information component of steps 2-3, 3-4, 7-5 and 7-6 may be skipped. The only essential feature is that the message be associated with at least one predetermined information component.

The messages and points in Figures 2, 3, 5, 6 and 7 are not in an absolute chronological order but they may take place simultaneously, or in another order. Other messages and points not shown in Figures 2, 3, 6 and 7 may take place between the messages and points mentioned above.

For example, an advertiser may want to limit the amount how many times the same information component, for example an advertisement, is sent to one and the same receiver. In this example, the system may register what information components are sent to a certain receiver (or to certain receivers) and when the limit is exceeded, the service may deny the delivery of a sponsored message, give to the sender an opportunity to select another advertisement and/or give to the sender a possibility of sending the message as a normal message, i.e. message without the advertisement in question.

Yet another example relates to delivering the message with the associated information component. The message to be delivered may be implemented so that the server component modifies the original message with DRM and settings and sends that to the receiver (without any specific information component). It is also possible to display only part of the message to the receiver, for example ¼ of the image or only the header. The same message may have a link, such as an URL address, or a request to open or obtain the information component before the whole message can be opened. The DRM opening the message (which now may contain an information component even if the modified message did not) can be arranged to send and/or submit the original message via a WAP link,for instance, to the receiver after the receiver has visited for example the advertiser's home page or the information component has been other wise presented to the receiver.

Still another implementation example relates to location information services. In this example, a server component (an MMSC or an AS) comprises location information or has access to a location information system, and messages passing through this server component are routed on the basis of the location information of the receiver and/or the sender to a server component simply relaying the message or to a server component associating the message with an information component. For example, in this embodiment, the location of the receiver and/or the sender is first determined and after that a message advertising the possibility of sending MMs with an advertisement is sent to the receiver and/or the user. The required service settings can also be sent.

Although not described above, it is obvious to one skilled in the art that the system according to the invention may comprise functionality offering subscribers a possibility of denying delivery of messages containing an information component. In other words, a subscriber may indicate to the system that he does not want to receive messages with further information added in the system. This denial can be performed subscriber-specifically and/or depending on the content of the associated information component. For example, the subscriber B may deny delivery of messages containing advertisements or certain advertisements or all messages with which an information component is associated, regardless of the content of the information component. This denial information is maintained in the system, for example in the user information and/or in the server component in question. Depending on the implementation, the original message may be delivered to the receiver or blocked by the system. The sender of the message is preferably notified about the denial, especially if the message is blocked.

Although in the above the invention has been described assuming that the sender sends the message to a receiver, it is obvious to one skilled in the art how to implement the invention when the sender sends the message to two or more receivers.

Although in the above the invention has been described assuming that one MMSC associates the message only with one type of information component, it is obvious to one skilled in the art how to implement the invention when one MMSC can associate the message with different types of information components and/or with one information component selected amongst different types of information components associable by the MMSC. For example, the system may be connected to a service like Sonera.net service, where the receiver may define a profile for himself, the profile indicating what the receiver is interested in. In that example information components to be associated with the message may be selected on the basis of that information, for instance in a situation where the sender of the message has indicated (by selecting a specific server component for instance) that he is willing to allow an information component to be associated with his message.

As can be seen from the above, the system delivering the message from the sender to the receiver handles subscribers subscriber-specifically, thus enabling recognization of both the sender and the receiver/receivers.

As stated earlier, features of different embodiments described above may be combined to achieve another embodiments of the invention.

The system implementing the functionality of the present invention and the network nodes of the system comprise not only prior art means, but also means for implementing the functions described in greater detail above. More specifically, they comprise at least a server component for associating a message with an information component. The present user terminals and network nodes comprise processors and memory that can be utilized in the functions of the invention. All changes needed for implementing the invention can be accomplished as added or updated software routines, using application specific integrated circuits (ASIC) and/or programmable circuits, such as EPLD (Electrically Programmable Logic Device), FPGA (Field Programmable Gate Array) and/or some other combination of hardware and software solutions.

It will be obvious to a person skilled in the art that, as the technology advances, the inventive concept can be implemented in various ways. The invention and its embodiments are not limited to the examples described above but may vary within the scope of the claims.

## Claims

1. A method in a telecommunication system, the method comprising
providing message delivery in the telecommunication system in two or more servers, MMSC1, MMSC2, AS1, at least one of which is arranged to associate messages with information;
sending (3-2, 7-2) a message from subscriber A to subscriber B via a server in the telecommunication system;
selecting (3-3) whether or not the message is to be associated with information by selecting, from among said two or more servers, a server via which the message is sent;
sending (3-2', 7-8) the message via the selected server to subscriber B; and
if the selected server is arranged to associate messages with information the method **characterized by**:
determining (3-4) capabilities of a user terminal used by the subscriber B;
selecting (3-4), on the basis of the capabilities of the user terminal used by the subscriber B, whether to embed the information to the message or to send the information in a separate message;
associating (3-4, 7-7) in the server the message with an information component using the selected way; and
delivering (3-2", 7-8) the message and the information component to the user terminal used by subscriber B either as one message or in subsequent messages.

2. A method as claimed in claim 1, further comprising:
selecting (3-3) the server via which the message is sent on the basis of a subscriber A's user profile currently in use and/or on the basis of a subscriber B's user profile currently in use.

3. A method as claimed in claim 1, or 2, further comprising:
selecting (3-3) by the subscriber A the server via which the message is sent.

4. A method as claimed in any one of the preceding claims, wherein the message is sent during a session between at least subscriber A and subscriber B.

5. A method as claimed in claim 5, further comprising adjusting the session parameters in response to sending the message via the server associating the message with the information component.

6. A telecommunication system (1, 1') providing a messaging service and comprising at least
two terminals (2, 2', 2", 2"') with access to the telecommunication system;
two or more servers (5, 5', 8) via which messages of the messaging service can be transmitted, at least one of the messaging servers (5, 5', 8) being a first type of server arranged to associate a message, sent by a sending terminal, with an information component and to forward the message and the information component to a receiving terminal;
selecting means for selecting whether or not a message is to be associated with an information component by selecting, from among said two or more servers, the server via which the message is transmitted from a sending terminal to a receiving terminal; and the system **characterized by**,
the first type of server (5, 5', 8) is arranged to associate the information component in two different ways, either by embedding the information component to the received message or by sending the information component in a separate message and to select the way of associating on the basis of capabilities of the receiving terminal before delivery, and, in response to the selected way of associating, to deliver the received message and the information component to the receiving terminal (2, 2', 2", 2"') either as one message or in subsequent messages.

7. A telecommunication system as claimed in claim 6, wherein the selecting means are arranged to select the server (5, 5', 8) via which the message is sent on the basis of a subscriber A's user profile currently in use and/or on the basis of a subscriber B's user profile currently in use.

8. A telecommunication system as claimed in claim 6 or 7, wherein the first type of server is a multimedia messaging service centre (5, 5').

9. A telecommunication system as claimed in claim 6, 7 or 8, wherein the system is based on the IMS, wherein the first type of server comprises an application server (8) performing the association and an S-CSCF (11) performing the forwarding.

10. A telecommunication system as claimed in claim 6, 7, 8 or 9, wherein the first type of server component is (5, 5', 8) arranged to select a manner of representation of the information component on the basis of capabilities of the receiving terminal (2, 2', 2", 2"') before associating the information component to the message.

11. A telecommunication system as claimed in claim 6, 7, 8, 9 or 10, wherein the first type of server component (5, 5', 8) further comprises storing means for storing the original content of the received message.

## Patentansprüche

1. Verfahren in einem Telekommunikationssystem, bei welchem Verfahren
Nachrichtenzustellung im Telekommunikationssystem in zwei oder mehreren Servern, MMSC1, MMSC2, AS1, vorgesehen wird, zumindest einer von welchen angeordnet ist, Nachrichten mit Informationen zu verbinden;
eine Nachricht von einem Teilnehmer A zu einem Teilnehmer B über einen Server im Telekommunikationssystem gesendet wird (3-2, 7-2);
gewählt wird (3-3), ob die Nachricht mit Informationen zu verbinden ist oder nicht, indem unter den besagten zwei oder mehreren Servern ein Server gewählt wird, über den die Nachricht gesendet wird;
die Nachricht über den gewählten Server an den Teilnehmer B gesendet wird (3-2', 7-8); und
falls der gewählte Server angeordnet ist, Nachrichten mit Informationen zu verbinden, das Verfahren **dadurch gekennzeichnet ist, dass**:
Fähigkeiten einer von dem Teilnehmer B benutzten Benutzerstation bestimmt werden (3-4);
aufgrund der Fähigkeiten der von dem Teilnehmer B benutzten Benutzerstation gewählt wird (3-4), ob die Informationen in die Nachricht eingebettet werden oder ob die Informationen in einer separaten Nachricht gesendet werden;
die Nachricht im Server mit einer Informationskomponente auf gewählte Weise verbunden wird (3-4, 7-7); und
die Nachricht und die Informationskomponente der von dem Teilnehmer B benutzten Benutzerstation entweder als eine Nachricht oder in nachfolgenden Nachrichten zugestellt werden (3-2", 7-8).

2. Verfahren nach Patentanspruch 1, bei dem ferner:
der Server, über den die Nachricht gesendet wird, aufgrund des derzeit verwendeten Benutzerprofils des Teilnehmers A und/oder aufgrund des derzeit verwendeten Benutzerprofils des Teilnehmers B gewählt wird (3-3).

3. Verfahren nach Patentanspruch 1 oder 2, bei dem ferner:
der Teilnehmer A den Server wählt (3-3), über den die Nachricht gesendet wird.

4. Verfahren nach einem der vorhergehenden Patentansprüche, wobei die Nachricht während einer Sitzung zwischen zumindest dem Teilnehmer A und dem Teilnehmer B gesendet wird.

5. Verfahren nach Patentanspruch 5, bei dem ferner die Sitzungsparameter als Reaktion darauf eingestellt werden, dass die Nachricht über den Server gesendet wird, der die Nachricht mit der Informationskomponente verbindet.

6. Telekommunikationssystem (1, 1'), das einen Nachrichtendienst anbietet, aufweisend zumindest:
zwei Endgeräte (2, 2', 2", 2"') mit Zugang zum Telekommunikationssystem;
zwei oder mehrere Server (5, 5', 8), über die Nachrichten des Nachrichtendienstes übertragen werden können, wobei zumindest einer der Nachrichtenvermittlungsserver (5, 5', 8) ein Server des ersten Typs ist, der angeordnet ist, eine von einem sendenden Endgerät gesendete Nachricht mit einer Informationskomponente zu verbinden und die Nachricht und die Informationskomponente an ein empfangendes Endgerät weiterzuleiten;
Wahlmittel zum Wählen, ob eine Nachricht mit einer Informationskomponente zu verbinden ist oder nicht, indem unter den besagten zwei oder mehreren Servern der Server gewählt wird, über den die Nachricht von einem sendenden Endgerät zu einem empfangenden Endgerät übertragen wird; und welches System **dadurch gekennzeichnet ist, dass**
der Server (5, 5', 8) des ersten Typs angeordnet ist, die Informationskomponente in zwei verschiedene Weisen zu verbinden, entweder durch Einbettung der Informationskomponente in die empfangene Nachricht oder durch Sendung der Informationskomponente in einer separaten Nachricht, und die Verbindungsart aufgrund von Fähigkeiten des empfangenden Endgeräts vor der Zustellung zu wählen und als Reaktion auf die gewählte Verbindungsart die empfangene Nachricht und die Informationskomponente dem empfangenden Endgerät (2, 2', 2", 2"') entweder als eine Nachricht oder in nachfolgenden Nachrichten zuzustellen.

7. Telekommunikationssystem nach Patentanspruch 6, wobei die Wahlmittel angeordnet sind, den Server (5, 5', 8), über den die Nachricht gesendet wird, aufgrund des derzeit verwendeten Benutzerprofils des Teilnehmers A und/oder aufgrund des derzeit verwendeten Benutzerprofils des Teilnehmers B zu wählen.

8. Telekommunikationssystem nach Patentanspruch 6 oder 7, wobei der Server des ersten Typs ein Multimedia Messaging Service Centre (5, 5') ist.

9. Telekommunikationssystem nach Patentanspruch 6, 7 oder 8, wobei das System auf dem IMS basiert, worin der Server des ersten Typs einen Anwendungsserver (8), der die Verbindung durchführt, und eine S-CSCF (11), die die Weiterleitung durchführt, aufweist.

10. Telekommunikationssystem nach Patentanspruch 6, 7, 8 oder 9, wobei die Serverkomponente (5, 5', 8) des ersten Typs angeordnet ist, eine Darstellungsweise der Informationskomponente aufgrund von Fähigkeiten des empfangenden Endgeräts (2, 2', 2", 2"') zu wählen, bevor die Informationskomponente mit der Nachricht verbindet wird.

11. Telekommunikationssystem nach Patentanspruch 6, 7, 8, 9 oder 10, wobei die Serverkomponente (5, 5', 8) des ersten Typs ferner Speichermittel zum Speichern des ursprünglichen Inhalts der empfangenen Nachricht aufweist.

## Revendications

1. Procédé dans un système de télécommunication, le procédé comprenant les étapes consistant à :
fournir une remise de message dans le système de télécommunication dans deux serveurs ou plus, MMSC1, MMSC2, AS1, dont l'un au moins est agencé de façon à associer des messages à des informations ;
envoyer (3 - 2, 7 - 2) un message d'un abonné A à un abonné B par l'intermédiaire d'un serveur dans le système de télécommunication ;
sélectionner (3 - 3) si le message doit être associé ou par à des informations en sélectionnant, à partir desdits deux serveurs ou plus, un serveur par l'intermédiaire duquel le message est envoyé ;
envoyer (3 - 2', 7 - 8) le message à l'abonné B par l'intermédiaire du serveur sélectionné ; et
si le serveur sélectionné est agencé de façon à associer des messages à des informations, le procédé est **caractérisé par** les étapes consistant à :
déterminer (3 - 4) les capacités d'un terminal d'utilisateur utilisé par l'abonné B ;
sélectionner (3 - 4), sur la base des capacités du terminal d'utilisateur utilisé par l'abonné B, s'il convient d'inclure des informations dans le message, ou d'envoyer les informations dans un message distinct ;
associer (3 - 4, 7 - 7) dans le serveur le message à un composant d'informations en utilisant la façon sélectionnée ; et
remettre (3 - 2", 7 - 8) le message et le composant d'informations au terminal d'utilisateur utilisé par l'abonné B en tant que message unique ou dans des messages ultérieurs.

2. Procédé selon la revendication 1, comprenant en outre une étape consistant à :
sélectionner (3 - 3) le serveur par l'intermédiaire duquel le message est envoyé sur la base du profil utilisateur de l'abonné A actuel en cours, et / ou sur la base du profil utilisateur de l'abonné B actuel en cours.

3. Procédé selon la revendication 1 ou la revendication 2, comprenant en outre une étape consistant à :
faire sélectionner (3 - 3) par l'abonné A le serveur par l'intermédiaire duquel le message est envoyé.

4. Procédé selon l'une quelconque des revendications précédentes, dans lequel le message est envoyé au cours d'une session entre au moins un abonné A et un abonné B.

5. Procédé selon la revendication 5, comprenant en outre une étape consistant à régler les paramètres de session en réponse à l'envoi du message par l'intermédiaire du serveur qui associe le message au composant d'informations.

6. Système de télécommunication (1, 1') qui fournit un service de messagerie et qui comprend au moins :
deux terminaux (2, 2', 2", 2"') qui ont accès au système de télécommunication ;
deux serveurs ou plus (5, 5', 8) par l'intermédiaire desquels il est possible de transmettre des messages du service de messagerie, l'un au moins des serveurs de messagerie (5, 5', 8) étant un premier type de serveur agencé de façon à associer un message, envoyé par un terminal émetteur, à un composant d'informations, et à réexpédier le message et le composant d'informations à un terminal récepteur ;
des moyens de sélection destinés à sélectionner si un message doit être associé à un composant d'informations en sélectionnant, à partir desdits deux serveurs ou plus, le serveur par l'intermédiaire duquel le message est transmis à partir d'un terminal émetteur vers un terminal récepteur ; et le système étant **caractérisé par le fait que** :
le premier type de serveur (5, 5', 8) est agencé de façon à associer le composant d'informations de deux façons différentes, soit en incluant le composant d'informations dans le message reçu, soit en envoyant le composant d'informations dans un message distinct, et à sélectionner la façon d'effectuer l'association sur la base des capacités du terminal récepteur avant la remise, et, en réponse à la façon sélectionnée d'effectuer l'association, à remettre le message reçu et le composant d'informations au terminal récepteur (2, 2', 2", 2"') en tant que message unique ou dans des messages ultérieurs.

7. Système de télécommunication selon la revendication 6, dans lequel des moyens de sélection sont agencés de façon à sélectionner le serveur (5, 5', 8) par l'intermédiaire duquel le message est envoyé sur la base du profil utilisateur de l'abonné A actuel en cours, et / ou sur la base du profil utilisateur de l'abonné B actuel en cours.

8. Système de télécommunication selon la revendication 6 ou la revendication 7, dans lequel le premier type de serveur est un centre de service de messagerie multimédia (5, 5').

9. Système de télécommunication selon l'une quelconque des revendications 6 à 8, dans lequel le système est basé sur l'IMS, dans lequel le premier type de serveur comporte un serveur d'applications (8) qui exécute l'association, et un S - CSCF (11) qui exécute la réexpédition.

10. Système de télécommunication selon l'une quelconque des revendications 6 à 9, dans lequel le premier type de composant serveur (5, 5', 8) est agencé de façon à sélectionner une façon de représenter le composant d'informations sur la base des capacités du terminal récepteur (2, 2', 2", 2"') avant d'associer le composant d'informations au message.

11. Système de télécommunication selon l'une quelconque des revendications 6 à 10, dans lequel le premier type de composant serveur (5, 5', 8) comprend en outre des moyens de stockage destinés à stocker le contenu original du message reçu.
